(19) Europäisches Patentamt

European Patent Office

Office européen des brevets

(11) **EP 1 339 803 B1**

(12) **EUROPÄISCHE PATENTSCHRIFT**

(45) Veröffentlichungstag und Bekanntmachung des Hinweises auf die Patenterteilung:
**17.11.2004 Patentblatt 2004/47**

(21) Anmeldenummer: 01974219.6

(22) Anmeldetag: **30.08.2001**

(51) Int Cl.$^7$: **C09C 1/24**, C01G 49/06

(86) Internationale Anmeldenummer:
**PCT/EP2001/009981**

(87) Internationale Veröffentlichungsnummer:
**WO 2002/020675 (14.03.2002 Gazette 2002/11)**

(54) **VERFAHREN ZUR HERSTELLUNG VON EISENOXIDGELBPIGMENTEN**

METHOD FOR PRODUCING IRON OXIDE YELLOW PIGMENTS

PROCEDE POUR PRODUIRE DES PIGMENTS JAUNES A BASE D'OXYDE DE FER

(84) Benannte Vertragsstaaten:
**AT BE CH CY DE DK ES FI FR GB GR IE IT LI LU MC NL PT SE TR**

(30) Priorität: **08.09.2000 DE 10044398**
           **13.10.2000 DE 10050682**

(43) Veröffentlichungstag der Anmeldung:
**03.09.2003 Patentblatt 2003/36**

(73) Patentinhaber: **Bayer Chemicals AG**
**51368 Leverkusen (DE)**

(72) Erfinder: **MEISEN, Ulrich**
**53925 Kall (DE)**

(56) Entgegenhaltungen:
**EP-A- 0 704 498**        **EP-A- 0 911 369**
**EP-A- 0 911 370**        **US-A- 5 451 253**

**Beschreibung**

Die vorliegende Erfindung betrifft ein spezielles Verfahren zur Herstellung von Eisenoxidgelbpigmenten nach dem Fällungsverfahren aus den Rohstoffen Eisen-(II)-chlorid und einer alkalischen Komponente wobei der pH-Wert nach Zugabe des $\alpha$-FeOOH-Keims zum vorgefällten $FeCl_2$ bei 3 bis 7 liegt.

Das Fällverfahren zur Herstellung von Eisenoxidgelbpigmenten ist seit langem bekannt. Der typische Verlauf dieses Verfahrens ist beispielsweise in Ullmann's Enceclopedia of Industrial Chemistry, 5th Ed., Vol A20, S. 297 ff beschrieben. Als Rohstoff wird gewöhnlich Eisen-II-sulfat, das beim Abbeizen von Stahlblechen anfällt oder auch Eisen-II-sulfat, das bei der Produktion von Titandioxid nach dem Sulfatverfahren entsteht, verwendet. Auch bei der Herstellung von synthetischem Rutil für die $TiO_2$-Herstellung fallen große Mengen $FeCl_2$ an.

In der Beizereiindustrie ist jedoch seit Jahren ein verstärkter Trend zum Einsatz von Salzsäure als Beizmittel zu beobachten. Das hierbei anfallende Eisen-II-chlorid ist aufgrund seiner Reinheit besonders zur Herstellung von Eisenoxidgelb geeignet. Weiterhin wird zur Herstellung von Titandioxid weltweit verstärkt das sogenannte Chloridverfahren angewendet. Aus beiden Quellen fallen also verstärkt Eisen-II-chlorid enthaltende Lösungen an, die möglichst zu einem Wertstoff umgearbeitet werden sollen. Ein gängiges Verfahren hierfür ist das Sprühröstverfahren, bei dem das Eisen-II-chlorid oder ein Eisen-III-chlorid bei hohen Temperaturen (typischerweise bei mehr als 1000°C) einer oxidativen Hydrolyse unterworfen wird. Als Endprodukte entstehen hier Eisenoxid, typischerweise Hämatit, und Salzsäure, die als gewünschter Wertstoff wieder in den Beizereiprozess eingeschleust wird. Ohne besondere Reinigungsschritte wird ein Eisenoxid erhalten, das in der Regel zur Herstellung von Hartferriten geeignet ist.

Sollen aus derartigen Eisenoxiden Weichferrite hergestellt werden, so muß die Eisenchloridlösung zusätzlichen Reinigungsoperationen unterworfen werde, was das Verfahren deutlich verteuert. Da immer mehr Eisenchlorid, großenteils minderer Qualität, angeboten wird, und die Aufnahmefähigkeit des Ferritmarkts begrenzt ist, wird eine Alternative zur Herstellung eines Wertstoffs aus diesem Eisenchloriden gesucht. Eine direkte Deponierung oder Verklappung der Eisenchloridlösungen ist aus ökologischen Gründen nicht möglich.

Ziel der vorliegenden Erfindung war also die Bereitstellung eines Verfahrens, welches das anfallende Eisenchlorid zu einem hochwertigen Wertstoff umwandelt.

Generell wird $\alpha$-FeOOH (Eisenoxidgelb) aus Eisen-II-salzen nach dem Fällverfahren (DE-A 2 455 158) oder nach dem Penniman-Verfahren (US-A 1 368 748, US-A 1 327 061) hergestellt. Bei beiden Verfahren wird zunächst ein Keim hergestellt, auf den dann in einem weiteren Schritt verhältnissmässig langsam weiteres $\alpha$-FeOOH aufwachsen gelassen wird. $FeCl_2$ wird in der Regel, im Gegensatz zu $FeSO_4$, nicht als kristalliner Stoff isoliert, da es eine deutlich höhere Wasserlöslichkeit als $FeSO_4$ hat. Es ist deshalb vielfach stärker verunreinigt als $FeSO_4$, das ja durch den Kristallisationsschritt gereinigt wird. Weiterhin enthält die $FeCl_2$-Lösung häufig noch organische Bestandteile, die sich stark auf den Kristallisationsprozess auswirken können.

Da Eisen-II-chloridlösungen aus Stahlbeizen und der $TiO_2$-Herstellung häufig störende Mengen höherwertige Kationen (z.B. Ti, Cr, Al, V, Si) enthalten, müssen diese durch Fällung mit einer alkalischen Komponente abgetrennt werden (EP-A 0 911370). Das hieraus resultierende Eisenchlorid hat einen pH-Wert zwischen 2 und 4.

Es wurde festgestellt, dass viele Eisen-II-chloridlösungen aus Stahlbeizen nicht zu reinem nadelförmigem $\alpha$-FeOOH bei Anwendung des sog. sauren Keimverfahrens (siehe auch EP-A 0 406 633, Beispiel 1) führen. An Stelle des $\alpha$-FeOOH erhält man bei Verwendung von $FeCl_2$ vielfach $\beta$-FeOOH in Form sehr langer dünner Nadeln. $\beta$-FeOOH zerfällt bei der anschließenden Pigmentbildung, in Abhängigkeit von der verwendeten Temperatur, teilweise zu $\alpha$-$Fe_2O_3$ (Chambaere, D.G. & De Grave, E.; Phys Chem Minerals; 12, (1985), 176-184). Es ist deshalb nicht möglich $\beta$-FeOOH als Keimmaterial zur Herstellung von $\alpha$-FeOOH -Pigmenten einzusetzen.

Um das kostengünstig erhältliche $FeCl_2$ aus Stahlbeizen dennoch einsetzen zu können, muss der Keim nach dem "alkalischen Verfahren" (US-A 2 558 304) hergestellt werden. Verfährt man mit einem "alkalischen" Gelbkeim nun nach dem bekannten Verfahren zum Pigmentaufbau, so ergibt sich bei Verwendung von vorgefälltem $FeCl_2$, nach Zugabe des Keims zum Eisen-II-chlorid ein pH-Wert von 5-7, was bei Temperaturen von mehr als 50° C zu unerwünschtem schwarzen Magnetit führt.

Es war also Aufgabe der vorliegenden Erfindung ein Verfahren zu finden, bei dem Eisenoxidgelb-Pigment aus vorgefälltem $FeCl_2$ und nach dem alkalischen Verfahren hergestellten Keim herstellbar ist.

Diese Aufgabe wird durch ein spezielles Verfahren gelöst, durch welches Eisenoxidgelbpigmente aus vorgefälltem $FeCl_2$ und nach dem "alkalischen" Verfahren hergestellten $\alpha$-FeOOH -Keimen herstellbar sind, das dadurch gekennzeichnet ist, dass bei der Pigmentherstellung

I) eine vorgefällte Fe(II)chloridlösung zu einem nach dem "alkalischen Verfahren" hergestellten $\alpha$-FeOOH-Keim gegeben wird, wobei

a. die Fe-Konzentration der verwendeten Eisenkomponente zwischen 70 und 220 g/l, bevorzugt zwischen 85 und 130 g/l liegt,

b. der Fe-III-Anteil der verwendeten Fe-Komponente weniger als 8 mol-% Fe-III, bevorzugt 0.1 bis 2.5 mol-% Fe-III beträgt,

c. der pH-Wert der Suspension nach Zugabe des akalischen Gelbkeims (bei 30° C gemessen) 3 bis 7, bevorzugt 4 bis 6 beträgt und

II) ein erster Oxidationsschritt durchgeführt wird, wobei

d. die Temperatur in diesem ersten Oxidationsschritt 20 bis 45, bevorzugt 30 bis 40° C beträgt,

e. die Oxidationsgeschwindigkeit in diesem ersten Oxidationsschritt bei 0.5 bis 10 mol-% gebildetes Fe-III/h, bevorzugt 4 bis 7 mol-% gebildetes Fe-III/h liegt,

f. der pH-Wert (gemessen in Suspension bei 30° C) bis zu dem dieser erste Oxidationsschritt durchgeführt wird zwischen 1.5 und 3.0, bevorzugt zwischen 2.4 und 2.8 liegt und

III) ein zweiter Oxidationsschritt durchgeführt wird, wobei

g. die Temperatur in diesem zweiten Oxidationsschritt 55 bis 85, bevorzugt 60 bis 75° C beträgt,

h. die Erhöhung des pH-Werts in diesem zweiten Oxidationsschritt mit einer Geschwindigkeit von 0.05 bis 1.0 pH/h, bevorzugt 0.1 bis 0.8 pH/h durch kontinuierliche Zugabe einer alkalischen Komponente erfolgt,

i. der Endpunkt der pH-Steigerung in diesem zweiten Oxidationsschritt bei pH 2.4 bis 5.2, bevorzugt bei 2.8 bis 4.2 liegt,

j. die Oxidationsgeschwindigkeit in diesem zweiten Oxidationsschritt bei 0.2 bis 10 mol-% gebildetes Fe-III/h, bevorzugt 0.4 bis 4 mol-% gebildetes Fe-III/h liegt,

k. zur Vermeidung von Sedimentation die Umwälzrate der Suspension bezogen auf das Endvolumen des Ansatzes während der Reaktion zwischen 1 und 15, bevorzugt zwischen 1 und 3 mal pro Stunde liegt.

Das erfindungsgemäße Verfahren wird folgendermaßen ausgeführt:

Vorfällung (bei hoher Reinheit des verwendeten $FeCl_2$ nicht notwendig):

Zu einer Eisen-II-chloridlösung mit einem $FeCl_2$-Gehalt zwischen 50 und 450 g/l wird unter intensivem Rühren soviel Natronlauge zugegeben, dass sich ein pH-Wert von 3 bis 5 einstellt. Anstelle der Natronlauge kann auch eine andere alkalische Komponenten wie z.B. $Ca(OH)_2$, $Na_2CO_3$ oder Ammoniak verwendet werden. Weiterhin verbessert sich das Sedimentationsverhalten des anfallenden Hydroxid- oder Carbonatschlamms durch Zugabe eines Flockungshilfsmittels. Hier können die bekannten Polyacrylate oder andere ähnlich wirkende Stoffe eingesetzt werden. Zur Verbesserung des Absetzverhaltens kann gegebenenfalls eine anschließende Oxidation erfolgen, die bewirkt, dass verschiedene Metallkationen in höherwertige Oxide oder Oxyhydroxide übergehen, die leichter abtrennbar sind.
Die Abtrennung des Hydroxidschlamms kann durch Sedimentation, Filtration oder Trennung mit einem Separator erfolgen, wobei die Auswahl des geeigneten Apparats bzw. der geeigneten Methode von den genauen Versuchsbedingungen, den Mengenströmen und den eingesetzten Rohstoffen abhängt.

Keimherstellung nach dem alkalischen Verfahren:

Zur Herstellung eines $\alpha$-FeOOH -Keims nach dem alkalischen Verfahren werden vorteilhafterweise diskontinuierlich Rührkessel, kontinuierliche Rührkessel, Strahlerreaktoren (ohne Rührer), Schlaufenreaktoren oder Rohrreaktoren eingesetzt.
Zu einer Lösung einer alkalischen Komponente (typischerweise Natronlauge, Natriumcarbonat, $Ca(OH)_2$ etc.) wird unter guter Durchmischung eine Fe-Komponente mit einer Konzentration von 21 bis 150 g/l Fe, vorzugsweise 44 bis 132 g/l Fe innerhalb von 15 bis 95 Minuten, bevorzugt 30 bis 55 Minuten zugegeben. Die Konzentration der alkalischen Komponente beträgt 3 - 15 Äquivalente pro Liter (bezogen auf die Stöchiometrie der Reaktion der Keimbildung). Die Menge alkalischen Fällungsmittels liegt zwischen 120 und 350 % der Stöchiometrie, bevorzugt werden 150 bis 250% der Stöchiometrie eingesetzt. Die Fällung erfolgt bei Temperaturen zwischen 30° C und 60° C, vorzugsweise 34° C bis 47° C.

Die anschließende Oxidation erfolgt mit einer Geschwindigkeit von 5 bis 50 mol-% Fe-III/h, bevorzugt 15 bis 30 mol-% Fe-III/h. Nachdem alles Fe-II zu Fe-III ($\alpha$-FeOOH ) oxidiert worden ist, wird der hergestellte Keim nach Prüfung (Teilchengröße) ohne weitere Isolierung zur Pigmentherstellung eingesetzt.

Pigmentbildung:

Zur Pigmentbildung sind diskontinuierliche Rührkessel, Reaktoren mit Strahlern (Zweistoffdüsen Flüssigkeit, Gas), Schlaufenreaktoren oder Blasensäulen besonders geeignet. Zu einer Lösung einer Fe-II-Komponente mit einem Fe-Gehalt von 70 bis 220 g/l Fe, bevorzugt 85 bis 130 g/l Fe wird in 10 bis 120 Minuten der alkalische Keim gepumpt. Je nach Verhältniss Fe im Keim zu Fe in der Fe-H-Komponente, Überschuss alkalische Komponente im Keim und pH der eingesetzten Fe-Komponente stellt sich ein pH-Wert zwischen 3 und 7 (bei 30° C gemessen) ein.

Vorzugsweise wird vorgefälltes $FeCl_2$, das einen pH-Wert von 2 bis 4 aufweist eingesetzt. Nach dem Zupumpen wird auf die erste Oxidationstemperatur von 20 bis 45, vorzugsweise 30 bis 40° C aufgeheizt. Dann wird mit einem Oxidationsmittel mit einer Geschwindigkeit von 0.5 bis 10 mol-%/h gebildetes Fe-III, bevorzugt 4 bis 7 mol-%/h, oxidiert. Dieser Schritt wird solange durchgeführt, bis alles nach der Vermischung von alkalischem Gelbkeim und Fe-Komponente gebildeten $Fe(OH)_2$ zu $\alpha$-FeOOH oxidiert ist, was bei einem pH- Wert von 1.5 bis 3.0 der Fall ist. Anschließend wird auf eine Temperatur von 55° C bis 85° C, vorzugsweise 60° C bis 75° C aufgeheizt.

Nach Erreichen dieser Temperatur wird der pH-Wert durch kontinuierliche Zugabe eines alkalischen Fällungsmittels mit einer Geschwindigkeit von 0.05 bis 1.0 pH/h, vorzugsweise 0.1 bis 0.8 pH/h gesteigert. Gleichzeitig wird kontinuierlich ein Oxidationsmittel so schnell zugegeben, dass die Oxidationsgeschwindigkeit zwischen 0.2 und 10 mol-%, vorzugsweise zwischen 0.4 und 4 mol-% gebildeten Fe-III/h liegt.

Die Erhöhung des pH-Werts wird nach Erreichen von pH 2.4 bis 5.2, vorzugsweise pH 2.8 bis 4.2 beendet und der pH-Wert dann bis zum Ende der Reaktion bei diesem Wert gehalten. Die Umwälzrate liegt während der gesamten Reaktion zwischen 1 und 15 mal dem Endvolumen der Reaktion.

Je nach gewählten Reaktionbedingungen erhält man hellere oder dunklere Gelbpigmente. In der folgenden Übersicht sind die wichtigsten Steuerparameter angegeben:

| Parameter | "helles Pigment" | "dunkleres Pigment" |
|---|---|---|
| Keim | fein | grob |
| Temperatur | 55 - 75° C | 60 - 85° C |
| End-pH | 2.4-3.8 | 3.2-5.2 |
| Oxidation | langsam | schnell |

Als Oxidationsmittel können eingesetzt werden:

- Luftsauerstoff
- reiner Sauerstoff
- Ozon
- $H_2O_2$
- Natriumhypochlorit oder Chlorlauge oder Calciumhypochlorit
- Chlorate(III) oder Chlorate(V)
- Perchlorate
- Nitrate
- Chlor

Die Oxidation wird beendet, sobald der Fe-II-Gehalt der Suspension kleiner als 1 mol-% ist. Eine weitere Oxidation zu 100% Umsetzung ist wirtschaftlich weniger sinnvoll, kann aber durchaus durchgeführt werden.

Als alkalische Komponente kommen in Frage:

- Alkalimentallhydroxide
- Alkalimetallcarbonate
- Erdalkalimetallhydroxide
- Erdalkalimetalloxide
- Erdalkalimetallcarbonate
- Ammoniak (als Lösung oder Gas)
- Organische N-Basen (in speziellen Fällen)

Schwer lösliche Verbindungen (z.B. $MgCO_3$) werden als wäßrig Aufschlämmungen eingesetzt. Kombinationen bei denen während der Reaktion schwerlösliche Nebenprodukte entstehen sollten nicht ausgeführt werden.

Stöchiometrien der Reaktionen:

Die Keimherstellung und der Pigmentaufbau erfolgen nach folgender Stöchiometrie:

$$2\ FeCl_2 + 4\ NaOH + 1/2\ O_2 \rightarrow 2\ FeOOH + 4\ NaCl + H_2O$$

oder

$$2\ FeCl_2 + 2\ Na_2CO_3 + 1/2\ O_2 + H_2O \rightarrow 2\ FeOOH + 4\ NaCl + 2\ CO_2$$

Steht nicht genügend geeignetes Eisen-II-chlorid zur Verfügung, so kann das Eisen-II-chlorid sowohl bei der Keimherstellung als auch bei der Pigmentherstellung teilweise durch Eisen-II-sulfat oder eine andere kostengünstige Fe-Quelle ersetzt werden. Die bevorzugte Ausführungsform ist jedoch der ausschließliche Einsatz von Eisen-II-chlorid.
Weiterhin ist es möglich bei der $TiO_2$-Produktion nach dem Chlorid-Verfahren anfallendes Eisen-III-chlorid mit metallischem Eisen zu Eisen-II-chlorid zu reduzieren. Diese Eisen-II-chloridlösung kann dann der oben beschriebenen Reinigung durch Vorfällung unterworfen werden.
Das erhaltene Eisenoxidgelbpigment ist besonders für die Einfärbung von Kunststoffen, Papier oder zur Herstellung von Dispersionsfarben oder anderen Lacken und Farben geeignet.
Der Fachmann wird durch geeignete Variation der angegebenen Herstellungsbedingungen in der Lage sein, eine breite Palette von Eisenoxidgelbpigmenten verschiedener Teilchengröße und somit verschiedener Farbtöne herzustellen.
Die Aufarbeitung der Pigmentsuspensionen erfolgt durch die bekannten Schritte Filtration, Trocknung und Mahlung.
Die Bestimmung der in den Beispielen angegebenen Eigenschaften erfolgt wie in EP-A 0 911 370 angegeben.
Nachfolgend wird die Erfindung beispielhaft beschrieben, worin jedoch keinerlei Einschränkungen zu sehen sind.

**Beispiel 1**

**Vorfällung der Eisen-II-komponente**

180 Liter $FeCl_2$ mit einem Fe-Gehalt von 90.5 g/l werden in einem Rührbehälter vorgelegt. Unter ständigem Rühren und Umpumpen wird der pH-Wert innerhalb von 248 Minuten von 0 auf 4.5 durch pH-geregeltes Zupumpen von Natronlauge mit einem Gehalt von 100 g/l gesteigert. Nach Beendigung der NaOH-Zugabe wird eine Lösung von 10 g Praestol® 2100L (Flockungshilfsmittel, Stockhausen GmbH, DE) in 5000 ml Wasser innerhalb von 5 Minuten zugegeben. Nach Zugabe des Flockungshilfsmittels wird noch 30 Minuten gerührt und Umgepumpt und dann 24 h stehen lassen. Anschließend wird die Klarphase über ein verschiebbares Tauchrohr abgezogen. Der anfallende Schlamm, der im Wesentlichen aus $FeCl_2$, $Fe(OH)_3$, $Al(OH)_3$ und $Cr(OH)_3$ besteht kann in geringen Mengen bei der Herstellung von Standardqualitäten von Eisenoxidgelb oder Eisenoxidschwarz eingesetzt werden.
Die erhaltene $FeCl_2$-Lösung hat folgende Eigenschaften:

| | |
|---|---|
| Fe-Gehalt [g/l] | 84.5 |
| Fe-III-Gehalt [mol-%] | 0.3 |
| Mn-Gehalt [Gew.-% bez. Fe] | 0.363 |
| Cr-Gehalt [Gew.-% bez. Fe] | 0.004 |
| Cu-gehalt [Gew.-% bez. Fe] | 0.001 |
| Si-Gehalt [Gew.-% bez. Fe] | 0.009 |
| Al-Gehalt [Gew.-% bez. Fe] | 0.04 |
| pH-Wert (bei 25° C) | 3.7 |

**Beispiel 2**

**Vorfällung der Eisen-II-komponente**

180 Liter $FeCl_2$ mit einem Fe-Gehalt von 115.3 g/l werden wie in Beispiel 1 beschrieben vorgefällt.

Die erhaltene $FeCl_2$ -Lösung hat folgende Eigenschaften:

| | |
|---|---|
| Fe-Gehalt [g/l] | 104.0 |
| Fe-III-Gehalt [mol-%] | 0.23 |
| Mn-Gehalt [Gew.-% bez. Fe] | 0.368 |
| Cr-Gehalt [Gew.-% bez. Fe] | 0.001 |
| Cu-gehalt [Gew.-% bez. Fe] | 0.014 |
| Si-Gehalt [Gew.-% bez. Fe] | 0.018 |
| Al-Gehalt [Gew.-% bez. Fe] | 0.001 |
| pH-Wert (bei 25° C) | 3.5 |

**Beispiel 3**

**Vergleichsversuch $FeCl_2$ ohne Vorfällung**

Die eingesetzte $FeCl_2$ -Lösung hat folgende Eigenschaften:

| | |
|---|---|
| Fe-Gehalt [g/l] | 107.8 |
| Fe-III-Gehalt [mol-%] | 0.9 |
| Mn-Gehalt [Gew.-% bez. Fe] | 0.338 |
| Cr-Gehalt [Gew.-% bez. Fe] | 0.054 |
| Cu-gehalt [Gew.-% bez. Fe] | 0.025 |
| Si-Gehalt [Gew.-% bez. Fe] | 0.027 |
| Al-Gehalt [Gew.-% bez. Fe] | 0.083 |
| pH-Wert (bei 25° C) | -0.1 |

**Beispiel 4**

**Herstellung eines alkalischen Gelbkeims**

In einem 30-Liter-Rührkessel mit 3-stufigem Kreuzbalkenrührer, Begasung über Begasungsring unterhalb des Rührers elektrischer Mantelheizung, Mantelkühlung, pH-Messung, Redoxmessung und Temperaturmessung wurden 15 mol $FeCl_2$ aus Beispiel 1 vorgelegt.

Zu dieser Lösung werden 5065 ml Wasser gegeben, so dass sich eine Fe-Konzentration von 55 g/l Fe einstellt. Unter ständigem Rühren (Drehzahl 831 l/min) wird auf die Fälltemperatur von 44° C aufgeheizt. Sobald diese Temperatur erreicht ist, wird mit 45 mol NaOH (= 1800 g) in 6000 ml Wasser gelöst (300 g/l = 7.5 Äquivalente pro Liter) innerhalb von 40 Minuten durch zupumpen dieser Lösung $Fe(OH)_2$ ausgefällt. Die NaOH-Menge beträgt also 150% der Stöchiometrie. Nach Beendigung der Fällung wird mit 525 Nl/h Luft begast. Die Oxidationszeit beträgt 248 Minuten, was einer Oxidationsgeschwindigkeit von 24.2 mol-% Fe-III pro Stunde entspricht.

Der erhaltene alkalische Gelbkeim hatte folgende Eigenschaften:

| | |
|---|---|
| BET-Oberfläche [$m^2/g$] | 53 |
| Kristallitgröße [nm] | 13 |
| $\alpha$-FeOOH -Gehalt [g/l] | 62.8 |
| NaOH-Gehalt [g/l] | 28.3 |

**Beispiel 5**

**Herstellung eines alkalischen Gelbkeims**

In einem 30-Liter-Rührkessel mit 3-stufigem Kreuzbalkenrührer, Begasung über Begasungsring unterhalb des Rührers elektrischer Mantelheizung, Mantelkühlung, pH-Messung, Redoxmessung und Temperaturmessung wurden 12000 ml NaOH-Lösung mit einem Gehalt von 100 g/l (= 2.5 Äquivalente pro Liter) gefüllt. Unter ständigem Rühren (Drehzahl 594 l/min) wird auf die Fälltemperatur von 36° C aufgeheizt. Sobald diese Temperatur erreicht ist, wird mit 10 mol $FeCl_2$ aus Beispiel 2 (= 1267 g $FeCl_2$ ) in 12675 ml Wasser gelöst (100 g/l $FeCl_2$ = 44.1 g/l Fe) innerhalb von 39 Minuten durch zupumpen dieser Lösung $Fe(OH)_2$ ausgefällt. Die NaOH-Menge beträgt also 150% der Stöchiometrie. Nach Beendigung der Fällung wird mit 100 Nl/h Luft begast. Die Oxidationszeit beträgt 225 Minuten, was einer Oxidationsgeschwindigkeit von 26.7 mol-% Fe-III/h entspricht.
Der erhaltene alkalische Gelbkeim hatte folgende Eigenschaften:

| | |
|---|---|
| BET-Oberfläche [m2/g] | 61 |
| Kristallitgröße [nm | 12 |
| $\alpha$-FeOOH -Gehalt [g/l] | 36.0 |
| NaOH-Gehalt [g/l] | 16.2 |

**Beispiel 6**

**Herstellung eines alkalischen Gelbkeims**

Es wurde wie in Beispiel 5 angegeben verfahren, jedoch bei einer Temperatur von 44° C gefällt. Die Oxidationszeit betrug 217 Minuten, was einer Oxidationsgeschwindigkeit von 27.6 mol-% Fe-III/h entspricht.
Der erhaltene alkalische Gelbkeim hatte folgende Eigenschaften:

| | |
|---|---|
| BET-Oberfläche [m2/g] | 48 |
| Kristallitgröße [nm | 15 |
| $\alpha$-FeOOH -Gehalt [g/l] | 36.0 |
| NaOH-Gehalt [g/l] | 16.2 |

**Beispiel 7**

**Vergleichsversuch Herstellung eines alkalischen Gelbkeims**

Es wurde wie in Beispiel 5 angegeben verfahren, es wurde jedoch ein nicht vorgefälltes $FeCl_2$, wie in Beispiel 3 beschrieben, verwendet. Die Oxidationszeit betrug 226 Minuten, was einer Oxidationsgeschwindigkeit von 26.7 mol-% Fe-III/h entspricht.
Der erhaltene alkalische Gelbkeim hatte folgende Eigenschaften:

| | |
|---|---|
| BET-Oberfläche [m2/g] | 61 |
| Kristallitgröße [nm] | 12 |
| $\alpha$-FeOOH -Gehalt [g/l] | 35.4 |
| NaOH-Gehalt [g/l] | 16.2 |

**Beispiel 8**

**Herstellung eines Eisenoxidgelbpigments**

In einem 30-Liter-Rührkessel mit 3-stufigem Kreuzbalkenrührer, Begasung über Begasungsring unterhalb des Rührers elektrischer Mantelheizung, Mantelkühlung, pH-Messung, Redoxmessung und Temperaturmessung wurden 18 mol vorgefälltes $FeCl_2$ aus Beispiel 1 gegeben (Fe-gehalt: 84.5 g/l, Fe-III-gehalt: 0.3 mol-%, pH: 3.7). In 30 Minuten wurde unter ständigem Rühren (Drehzahl 831 l/min) 4936 ml Gelbkeimsuspension aus Beispiel 5 (= 2.0 mol FeOOH und 2.0 mol NaOH) zugepumpt. Nach Zupumpen betrug der pH-Wert(bei 30° C gemessen) 5.5. Dann wurde auf 34° C aufgeheizt und nach Erreichen dieser Temperatur der erste Oxidationsschritt mit 36 Nl/h Luft Begasung gestartet. Nach 60 Minuten betrug der pH-Wert (gemessen bei 30° C) 2.5.

Die Oxidationsgeschwindigkeit betrug im ersten Oxidationsschritt 5.6 mol-% gebildetes Fe-III pro Stunde. Anschließend wurde auf 60° C aufgeheizt und der zweite Oxidationsschritt mit 36 Nl/h Luft gestartet. Sobald diese Temperatur erreicht war, wurde pH-geregelt Natronlaugelösung mit einem Gehalt von 300 g/l (= 7.5 Äquivalente pro Liter) zugepumpt. Die Erhöhung des pH-Werts geschah mit einer Geschwindigkeit von 0.2 pH/h, der Endpunkt der pH-Steigerung lag bei pH 3.4. Nach Erreichen dieses pH-Werts wurde der pH-Wert mit Natronlauge auf konstante 3.4 +/- 0.2 geregelt. Die Oxidationsgeschwindigkeit betrug im zweiten Oxidationsschritt 0.47 mol-% gebildetes Fe-III/h. Die Dauer des zweiten Oxidationsschritts betrug 2140 Minuten. Die Umwälzleistung des Rührers bezogen auf das Endvolumen von 22 Liter beträgt 13.6 pro Stunde. Während der Oxidation wurden Proben gezogen, filtriert, gewaschen und getrocknet und deren Farbwerte bestimmt.

| Probe-Nr. | Oxidationszeit | Purton L64, gegen Bayferrox 3910 | | | Aufhellung L64, gegen Bayferrox 3910 | | |
|---|---|---|---|---|---|---|---|
| | | dL* | da* | db* | FS [%] | da* | db* |
| B8/A | 11 h | 2.9 | -4.2 | -6.4 | 91 | -0.6 | 0.9 |
| B8/B | 16 h | 3.1 | -2.6 | -3.0 | 90 | -0.2 | 0.7 |
| B8/C | 19.5 h | 2.9 | -1.8 | -1.4 | 94 | 0.0 | 0.1 |
| B8/D | 24 h | 2.7 | -1.3 | -1.0 | 94 | 0.0 | -0.2 |
| B8/End | 35.677 h | 1.8 | -1.0 | -0.7 | 96 | 0.0 | -1.2 |

**Beispiel 9**

**Herstellung eines Eisenoxidgelbpigments**

Hierbei wurde wie in Beispiel 8 verfahren mit folgenden Unterschieden:

18.9 mol vorgefälltes $FeCl_2$ aus Beispiel 2 eingesetzt und mit Wasser auf 200 g/l $FeCl_2$ eingestellt. 5183 ml Gelbkeimsuspension (= 2.1 mol FeOOH und 2.1 mol NaOH). pH-Wert nach Zugabe Keim 6.2 (bei 30° C gemessen).

Erster Oxidationsschritt mit 38 Nl/h Luft, Oxidationsdauer 59 Minuten, Oxidationsgeschwindigkeit 5.6 mol-% Fe-III/h.

Während der Oxidation wurden Proben gezogen, filtriert, gewaschen und getrocknet und deren Farbwerte bestimmt.

| Probe-Nr. | Oxidationszeit | Purton L64, gegen Bayferrox 3910 | | | Aufhellung L64, gegen Bayferrox 3910 | | |
|---|---|---|---|---|---|---|---|
| | | dL* | da* | db* | FS [%] | da* | db* |
| B9/A | 13 h | 1.3 | -6.0 | -12.2 | 89 | -1.2 | 0.7 |
| B9/B | 18h | 3.1 | -5.1 | -8.0 | 89 | -0.9 | 1.0 |
| B9/C | 21.5 h | 3.7 | -4.0 | -4.9 | 90 | -0.8 | 0.8 |
| B9/D | 26 h | 3.8 | -3.0 | -2.8 | 89 | -0.5 | 1.3 |
| B9/E | 32h | 3.4 | -2.0 | -1.3 | 91 | -0.3 | 0.8 |
| B9/End | 35.677 h | 2.8 | -1.6 | -0.9 | 92 | -0.3 | 0.5 |

**Beispiel 10**

**Herstellung eines Eisenoxidgelbpigments**

Hierbei wurde wie in Beispiel 9 verfahren, es wurde jedoch der Gelbkeim aus Beispiel 6 eingesetzt.
pH-Wert nach Zugabe Keim 6.2 (bei 30° C gemessen).
Erster Oxidationsschritt mit 38 Nl/h Luft, Oxidationsdauer 92 Minuten,
Oxidationsgeschwindigkeit 3.6 mol-% Fe-III/h.
Oxidationsgeschwindigkeit zweiter Oxidationsschritt 0.42 mol-% Fe-III/h.

Während der Oxidation wurden Proben gezogen, filtriert, gewaschen und getrocknet und deren Farbwerte bestimmt.

| | | Purton L64, gegen Bayferrox 3910 | | | Aufhellung L64, gegen Bayferrox 3910 | | |
|---|---|---|---|---|---|---|---|
| Probe-Nr. | Oxidationszeit | dL* | da* | db* | FS [%] | da* | db* |
| B10/A | 13 h | 3.1 | -4.6 | -7.4 | 92 | -0.8 | 0.3 |
| B10/B | 17.6 h | 3.3 | -3.1 | -3.9 | 92 | -0.5 | 0.1 |
| B10/C | 23.3 h | 3.0 | -2.0 | -2.0 | 93 | -0.3 | 0.2 |
| B10/D | 31 h | 2.6 | -1.2 | -0.7 | 94 | -0.1 | -0.5 |
| B10/End | 42.677 h | 1.5 | -0.4 | -0.4 | 97 | 0.1 | -1.8 |

**Beispiel 11**

**Herstellung eines Eisenoxidgelbpigments**

Hierbei wurde wie in Beispiel 8 verfahren, es wurde der Gelbkeim aus Beispiel 4 eingesetzt. Es wurde das in Beispiel 1 beschriebene $FeCl_2$ eingesetzt. Die Unterschiede zu Beispiel 8 finden sich in der folgenden Tabelle. Messbedingungen und sonstige Bedingungen wie in Beispiel 8 beschrieben.

| | |
|---|---|
| Keimmenge | 2.0 mol |
| $FeCl_2$ -Menge | 18.8 mol |
| pH vor erster Oxidation | 5.5 |
| Temperatur erste Oxidation | 35° C |
| Geschwindigkeit erste Oxidation | 5.2 mol-% Fe-III/h |
| pH nach erster Oxidation | 2.2 |
| Luftmenge 2. Oxidation | 12 Nl/h |
| Temperatur 2.Oxidation | 75° C |
| Geschwindigkeit 2.Oxidation | 3.6 mol-% Fe-III/h |

Während der Oxidation wurden Proben gezogen, filtriert, gewaschen und getrocknet und deren Farbwerte bestimmt.

| | | Purton L64, gegen Bayferrox 3905 | | | Aufhellung L64, gegen Bayferrox 3905 | | |
|---|---|---|---|---|---|---|---|
| Probe-Nr. | Oxidationszeit | dL* | da* | db* | FS [%] | da* | db* |
| B11/A | 5 h | 0.9 | -4.4 | -11.3 | 96 | -0.8 | -0.8 |
| B11/B | 9 h | 3.0 | -2.4 | -4.0 | 95 | -0.2 | -0.7 |
| B11/C | 18.3 h | 1.9 | -0.1 | -0.8 | 98 | 0.2 | -2.4 |
| B11/D | 19 h | 1.5 | 0.2 | -0.5 | 98 | 0.4 | -2.7 |
| B11/E | 21 h | 1.1 | 0.6 | -0.4 | 99 | 0.5 | -3.3 |
| B11/End | 28 h | 0.6 | 0.6 | -0.7 | 101 | 0.5 | -3.8 |

**Patentansprüche**

1.  Verfahren zur Herstellung von Eisenoxidgelbpigmenten aus vorgefälltem $FeCl_2$ und nach dem "alkalischen" Verfahren hergestellten $\alpha$-FeOOH -Keimen, **dadurch gekennzeichnet ist, dass** bei der Pigmentherstellung

   I)  eine vorgefällte Fe(II)chloridlösung zu einem nach dem "alkalischen Verfahren" hergestellten $\alpha$-FeOOH-Keim gegeben wird, wobei

   a. die Fe-Konzentration der verwendeten Eisenkomponente zwischen 70 und 220 g/l, bevorzugt zwischen 85 und 130 g/l liegt,

b. der Fe-III-Anteil der verwendeten Fe-Komponente weniger als 8 mol-% Fe-III, bevorzugt 0.1 bis 2.5 mol-% Fe-III beträgt,

c. der pH-Wert der Suspension nach Zugabe des akalischen Gelbkeims (bei 30° C gemessen) 3 bis 7, bevorzugt 4 bis 6 beträgt und

II) ein erster Oxidationsschritt durchgeführt wird, wobei

d. die Temperatur in diesem ersten Oxidationsschritt 20 bis 45, bevorzugt 30 bis 40° C beträgt,

e. die Oxidationsgeschwindigkeit in diesem ersten Oxidationsschritt bei 0.5 bis 10 mol-% gebildetes Fe-III/h, bevorzugt 4 bis 7 mol-% gebildetes Fe-III/h liegt,

f. der pH-Wert (gemessen in Suspension bei 30° C) bis zu dem dieser erste Oxidationsschritt durchgeführt wird zwischen 1.5 und 3.0, bevorzugt zwischen 2.4 und 2.8 liegt und

III) ein zweiter Oxidationsschritt durchgeführt wird, wobei

g. die Temperatur in diesem zweiten Oxidationsschritt 55 bis 85, bevorzugt 60 bis 75° C beträgt,

h. die Erhöhung des pH-Werts in diesem zweiten Oxidationsschritt mit einer Geschwindigkeit von 0.05 bis 1.0 pH/h, bevorzugt 0.1 bis 0.8 pH/h durch kontinuierliche Zugabe einer alkalischen Komponente erfolgt,

i. der Endpunkt der pH-Steigerung in diesem zweiten Oxidationsschritt bei pH 2.4 bis 5.2, bevorzugt bei 2.8 bis 4.2 liegt,

j. die Oxidationsgeschwindigkeit in diesem zweiten Oxidationsschritt bei 0.2 bis 10 mol-% gebildetes Fe-III/h, bevorzugt 0.4 bis 4 mol-% gebildetes Fe-III/h liegt,

k. die Umwälzrate der Suspension bezogen auf das Endvolumen des Ansatzes während der Reaktion zwischen 1 und 15, bevorzugt zwischen 1 und 3 mal pro Stunde liegt.

**2.** Verfahren gemäß Anspruch 1, **dadurch gekennzeichnet, dass** der alkalische $\alpha$-FeOOH Gelbkeim unter folgenden Bedingungen hergestellt wird:

a. die Fälltemperatur liegt zwischen 30 und 60° C, bevorzugt zwischen 34 und 47° C,

b. die Oxidationsgeschwindigkeit beträgt 5 bis 50, bevorzugt 15 bis 30 mol-% Fe-III pro Stunde,

c. der Überschuss an alkalischem Fällmittel liegt zwischen 120% und 350%, bevorzugt zwischen 150% und 250 % der Stöchiometrie,

d. die Konzentration der Fe-Komponente liegt zwischen 21 und 150 g/l Fe, bevorzugt zwischen 44 und 132 g/l Fe,

e. die Konzentration der alkalischen Komponente liegt zwischen 1.25 und 15 Äquivalenten pro Liter, bevorzugt zwischen 2.5 und 7.5 Äquivalenten pro Liter,

f. die Fällzeit des $Fe(OH)_2$ beträgt 15 bis 95 Minuten, bevorzugt 30 bis 55 Minuten.

**3.** Verfahren gemäß Anspruch 1, **dadurch gekennzeichnet, dass** die eingesetzte Fe-Komponente durch Fällung mit einer alkalischen Komponente unter Zusatz eines Flockungshilfsmittels und unter Durchmischung bis zu einem pH-Wert von 3 bis 5 und anschließende Abtrennung des gebildeten Schlamms gereinigt wurde.

**4.** Verfahren zur Herstellung von Eisenoxidgelbpigmenten gemäß einem der Ansprüche 1-3, **dadurch gekennzeichnet, dass** als alkalische Komponente Natronlauge, Natriumcarbonat, Magnesiumcarbonat, MgO, $Mg(OH)_2$, CaO, $Ca(OH)_2$ oder Ammoniak verwendet wird.

**5.** Verfahren zur Herstellung von Eisenoxidgelbpigmenten gemäß einem der Ansprüche 1-4, **dadurch gekennzeichnet, dass** als Oxidationsmittel Luftsauerstoff, $O_2$, $O_3$, $H_2O_2$, $Cl_2$, Chlorate(I) bis Chlorate(VII) oder Nitrate verwendet werden, bevorzugt ist die Verwendung von Luftsauerstoff.

**6.** Verwendung von nach dem Verfahren gemäß Ansprüchen 1-5 erhaltenen Eisenoxidgelbpigmenten zur Einfärbung von Baustoffen.

**7.** Verwendung gemäß Anspruch 6 zur Einfärbung von Kunststoffen, Papier oder zur Herstellung von Farbmittelzubereitungen.

**8.** Verwendung gemäß Anspruch 6 zur Herstellung von Farbmitteln, die mit Lebensmitteln in Kontakt kommen.

**9.** Verwendung gemäß Anspruch 6 zur Herstellung heterogener Katalysatoren, bevorzugt zur $\alpha$-FeOOH Ethylbenzoldehydrierung.

## Claims

**1.** A process for preparing yellow iron oxide pigments from preprecipitated $FeCl_2$ and from $\alpha$-FeOOH nuclei prepared by the "alkaline" process, **characterized in that** in the preparation of the pigment

I) a preprecipitated Fe(II) chloride solution is added to an $\alpha$-FeOOH nucleus prepared by the "alkaline process",

a. the Fe concentration of the iron component used being between 70 and 220 g/l, preferably between 85 and 130 g/l,

b. the Fe(III) fraction of the Fe component used being less than 8 mol% Fe(III), preferably from 0.1 to 2.5 mol% Fe(III),

c. the pH of the suspension following addition of the alkaline yellow nucleus (measured at 30°C) being from 3 to 7, preferably from 4 to 6, and

II) a first oxidation step is carried out,

d. the temperature in this first oxidation step being from 20 to 45°C, preferably from 30 to 40°C,

e. the oxidation rate in this first oxidation step being from 0.5 to 10 mol% Fe(III) formed/h, preferably from 4 to 7 mol% Fe(III) formed/h,

f. the pH (measured in suspension at 30°C) up to which this first oxidation step is carried out being between 1.5 and 3.0, preferably between 2.4 and 2.8, and

III) a second oxidation step is carried out,

g. the temperature in this second oxidation step being from 55 to 85, preferably from 60 to 75°C,

h. the increase in pH in this second oxidation step taking place at a rate of from 0.05 to 1.0 pH/h, preferably from 0.1 to 0.8 pH/h, by continuous addition of an alkaline component,

i. the endpoint of the pH increase in this second oxidation step being at a pH of from 2.4 to 5.2, preferably from 2.8 to 4.2,

j. the oxidation rate in this second oxidation step being from 0.2 to 10 mol% Fe(III) formed/h, preferably from 0.4 to 4 mol% Fe(III) formed/h,

k. the circulation rate of the suspension relative to the final volume of the batch during the reaction being between 1 and 15, preferably between 1 and 3, times per hour.

**2.** The process as claimed in claim 1, **characterized in that** the alkaline α-FeOOH yellow nucleus is prepared under the following conditions:

    a. the precipitation temperature is between 30 and 60°C, preferably between 34 and 47°C,

    b. the oxidation rate is from 5 to 50, preferably from 15 to 30 mol% Fe(III) per hour,

    c. the excess of alkaline precipitant is between 120% and 350%, preferably between 150% and 250% of the stoichiometry,

    d. the concentration of the Fe component is between 21 and 150 g/l Fe, preferably between 44 and 132 g/l Fe,

    e. the concentration of the alkaline component is between 1.25 and 15 equivalents per liter, preferably between 2.5 and 7.5 equivalents per liter,

    f. the precipitation time of the $Fe(OH)_2$ is from 15 to 95 minutes, preferably from 30 to 55 minutes.

**3.** The process as claimed in claim 1, **characterized in that** the Fe component used has been purified by precipitation with an alkaline component with the addition of a flocculating assistant and with thorough mixing up to a pH of from 3 to 5 with subsequent separation of the sludge that is formed.

**4.** The process for preparing yellow iron oxide pigments as claimed in one of claims 1-3, **characterized in that** sodium hydroxide solution, sodium carbonate, magnesium carbonate, MgO, $Mg(OH)_2$, CaO, $Ca(OH)_2$ or ammonia is used as alkaline component.

**5.** The process for preparing yellow iron oxide pigments as claimed in one of claims 1-4, **characterized in that** atmospheric oxygen, $O_2$, $O_3$, $H_2O_2$, $Cl_2$, chlorates(I) to chlorates(VII) or nitrates are used as oxidizing agent, preference being given to the use of atmospheric oxygen.

**6.** The use of yellow iron oxide pigments obtained by the process as claimed in claims 1-5 for coloring building materials.

**7.** The use as claimed in claim 6 for coloring plastics or paper or for preparing colorant formulations.

**8.** The use as claimed in claim 6 for preparing colorants which come into contact with foods.

**9.** The use as claimed in claim 6 for preparing heterogeneous catalysts, preferably for the α-FeOOH dehydrogenation of ethylbenzene.

**Revendications**

**1.** Procédé de préparation de pigments jaunes d'oxyde de fer à partir de $FeCl_2$ précipité au préalable et avec des germes de α-FeOOH préparés selon le procédé "alcalin", qui est **caractérisé en ce que** pour la préparation du pigment

    I) on ajoute à une solution de chlorure de fer (II) précipité au préalable un germe de α-FeOOH préparé selon le "procédé alcalin", où

        a. la concentration de Fe du composant de fer utilisé est entre 70 et 220 g/l, de préférence entre 85 et 130 gf/l,
        b. la quantité de Fe III du composant de Fe utilisé est inférieure à 8 % en moles de Fe III, de préférence 0,1 à 2,5 % en moles de Fe III,
        c. la valeur du pH de la suspension après addition du germe jaune alcalin (mesurée à 30°C) est 3 à 7, de préférence 4 à 6 et

    II) on effectue une première étape d'oxydation, dans laquelle

d. la température dans cette première étape d'oxydation atteint 20 à 45, de préférence 30 à 40°C,

e. la vitesse d'oxydation dans cette première étape d'oxydation est de 0,5 à 10 % en moles de Fe III formé/h, de préférence 4 à 7 % en moles de Fe III formé/h,

f. la valeur du pH (mesurée dans la suspension à 30°C) jusqu'à laquelle cette première étape d'oxydation est effectuée, est entre 1,5 et 3,0, de préférence entre 2,4 et 2,8, et

III) on effectue une deuxième étape d'oxydation, dans laquelle

g. la température dans cette deuxième étape d'oxydation atteint 55 à 85, de préférence 60 à 75°C,

h. l'élévation de la valeur du pH dans cette deuxième étape d'oxydation a lieu avec une vitesse de 0,05 à 1,0 pH/h, de préférence 0,1 à 0,8 pH/h par addition en continu d'un composant alcalin,

i. le point final de la montée du pH dans cette deuxième étape d'oxydation est de 2,4 à 5,2, de préférence 2,8 à 4,2,

j. la vitesse d'oxydation dans cette deuxième étape d'oxydation est de 0,2 à 10 % en moles de Fe III formé/h, de préférence 0,4 à 4 % en moles de Fe III formé/h,

k. la vitesse de circulation de la suspension rapportée au volume final du dépôt pendant la réaction est entre 1 et 15, de préférence entre 1 et 3 fois par heure.

**2.** Procédé selon la revendication 1, **caractérisé en ce que** le germe jaune d'$\alpha$-FeOOH alcalin est préparé dans les conditions suivantes:

a. la température de précipitation est entre 30 et 60°C, de préférence entre 34 et 47°C,

b. la vitesse d'oxydation est de 5 à 50, de préférence 15 à 30 % en moles de Fe III par heure,

c. l'excès d'agent de précipitation alcalin est entre 120 % et 350 %, de préférence entre 150 % et 250 % de la stoechiométrie,

d. la concentration du composant de Fe est entre 21 et 150 g/l de Fe, de préférence entre 44 et 132 g/l de Fe,

e. la concentration du composant alcalin est entre 1,25 et 15 équivalents par litre, de préférence entre 2,5 et 7,5 équivalents par litre,

f. la durée de précipitation de $Fe(OH)_2$ est de 15 à 95 minutes, de préférence 30 à 55 minutes.

**3.** Procédé selon la revendication 1, **caractérisé en ce que** le composant de Fe utilisé est purifié par précipitation avec un composant alcalin avec addition d'un agent auxiliaire de floculation et par mélange intime jusqu'à une valeur de pH de 3 à 5 et ensuite séparation de la boue formée.

**4.** Procédé de préparation de pigments jaunes d'oxyde de fer selon l'une des revendications 1 - 3, **caractérisé en ce qu'**on utilise comme composant alcalin de la lessive de soude, du carbonate de sodium, du carbonate de magnésium, MgO, $Mg(OH)_2$, CaO, $Ca(OH)_2$ ou de l'ammoniac.

**5.** Procédé de préparation de pigments jaunes d'oxyde de fer selon l'une des revendications 1 - 4, **caractérisé en ce qu'**on utilise comme agent d'oxydation l'oxygène de l'air, $O_2$, $O_3$, $H_2O_2$, $Cl_2$, le chlorate (I) au chlorate (VII) ou un nitrate, l'utilisation de l'oxygène de l'air étant préférée.

**6.** Utilisation des pigments jaunes d'oxyde de fer obtenus selon le procédé selon les revendications 1 - 5 pour la coloration des matériaux de construction.

**7.** Utilisation selon la revendication 6 pour la coloration de matières plastiques, de papier ou pour la préparation colorants.

**8.** Utilisation selon la revendication 6 pour la préparation de colorants qui viennent en contact avec des produits alimentaires.

**9.** Utilisation selon la revendication 6 pour la préparation de catalyseurs hétérogènes, de préférence pour la déshydrogénation de l'éthylbenzène par $\alpha$-FeOOH.